# EUROPEAN PATENT SPECIFICATION

(11) **EP 4 350 822 B1**
(45) Date of publication and mention of the grant of the patent: **03.06.2026**
(21) Application number: 22811054.0
(22) Date of filing: 12.04.2022
(51) Int. Cl.: H01M 10/04, H01M 50/538, H01M 50/533, H01M 50/536

(54) **JOINING METHOD**
FÜGEVERFAHREN
PROCÉDÉ D'ASSEMBLAGE

(30) Priority: 27.05.2021 JP 2021089023
(43) Date of publication of application: 10.04.2024
(73) Proprietor: Panasonic Intellectual Property Management Co., Ltd., Osaka-shi, Osaka 540-6207 (JP)
(72) Inventor: MORIYAMA, Yusuke, Kadoma-shi, Osaka 571-0057 (JP); SHINOBU, Tomoaki, Kadoma-shi, Osaka 571-0057 (JP); UEGAKI, Shunsuke, Kadoma-shi, Osaka 571-0057 (JP); HIROSE, Takayuki, Kadoma-shi, Osaka 571-0057 (JP)
(74) Representative: Novagraaf International SA
(86) International application number: PCT/JP2022/017610
(87) International publication number: WO 2022/249780

(56) References cited:
- WO-A1-2021/020119
- JP-A- 2003 162 995
- JP-A- 2006 310 254
- JP-A- 2008 166 030
- JP-A- 2014 222 683
- JP-A- 2015 106 614
- JP-A- 2015 106 614
- JP-A- 2017 063 044
- JP-A- 2017 063 044

## Description

### TECHNICAL FIELD

The present disclosure relates to a method for joining an electrode group and a current collector plate.

### BACKGROUND ART

Conventionally, a battery in which a wound electrode group and an electrolyte are housed in a cylindrical exterior can is known. With regard to such a battery, Patent Literature 1 discloses a method in which, at each of both ends of the electrode group, slits are radially provided on the portions that are not coated with the active material layer, and such uncoated portions are bent outward in radial directions of the electrode group to form a flat welding surface, which is welded to a current collector plate.

### PRIOR ART REFERENCE

### PATENT LITERTURE

Patent Literature 1: Japanese Unexamined Patent Application Publication No. 2007-227137
Patent literature 2: JP 2014 222683 A discloses a joining method for joining an electrode plate and a current collector plate, wherein a jig is pressed against a plurality of end parts of the electrode plate arranged in a radial direction and the plurality of end parts are bent.

### SUMMARY OF INVENTION

### TECHNICAL PROBLEM

As a result of intensive study regarding the method for joining a current collector plate to a welding surface formed by bending uncoated portions, the inventors have found that there is room for improvement in the conventional methods in order to further improve the quality of batteries.

The present disclosure has been made in view of such a situation, and a purpose thereof is to provide a technology for improving the quality of batteries.

### SOLUTION TO PROBLEM

One embodiment of the present invention relates to a joining method for joining an electrode group of wound type in which a separator and an electrode plate are laminated and wound, and a current collector plate. The joining method includes pressing a jig against multiple end parts of the electrode plate arranged in a radial direction of the electrode group, shifting the jig in a curved path such that the shifting amount in the direction toward the electrode group gradually increases and the shifting amount in the radial direction gradually decreases, bending the multiple end parts, and joining the multiple end parts thus bent and the current collector plate.

### ADVANTAGEOUS EFFECTS OF INVENTION

According to the present invention, the quality of batteries can be improved.

### BRIEF DESCRIPTION OF DRAWINGS

FIG. 1 is a sectional view of a battery.
FIG. 2A is a diagram that shows a formation process of an electrode group. FIG. 2B is a diagram that shows a processing process of the electrode group.
FIG. 3A is a diagram that shows a state where end parts of the electrode group are bent. FIG. 3B is a diagram that shows a state after the electrode group and current collector plates are joined together.

### DESCRIPTION OF EMBODIMENTS

In the following, the present disclosure will be described based on a preferred embodiment with reference to the drawings. The embodiment is intended to be illustrative only and not to limit the present disclosure, so that it should be understood that not all of the features or combinations thereof described in the embodiment are necessarily essential to the present disclosure. Like reference characters denote like or corresponding constituting elements, members, and processes in each drawing, and repetitive description will be omitted as appropriate. Also, the scale or shape of each component shown in each drawing is defined for the sake of convenience to facilitate the explanation and is not to be regarded as limitative unless otherwise specified. Further, when the terms "first", "second", and the like are used in the present specification or claims, such terms do not imply any order or degree of importance and are used to distinguish one configuration from another, unless otherwise specified. Further, in each drawing, part of a member less important in describing the embodiment may be omitted.

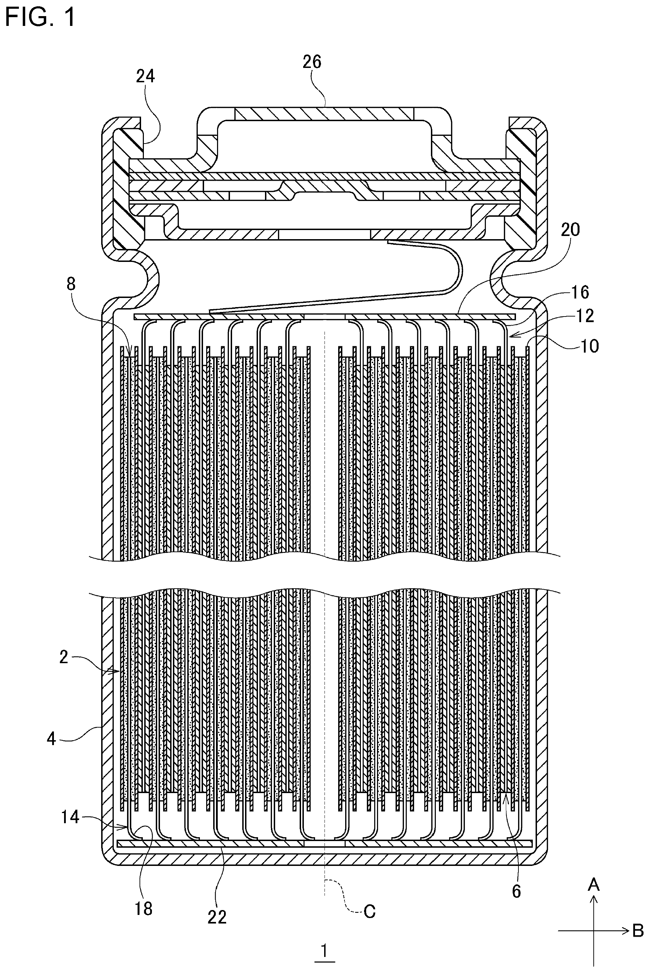

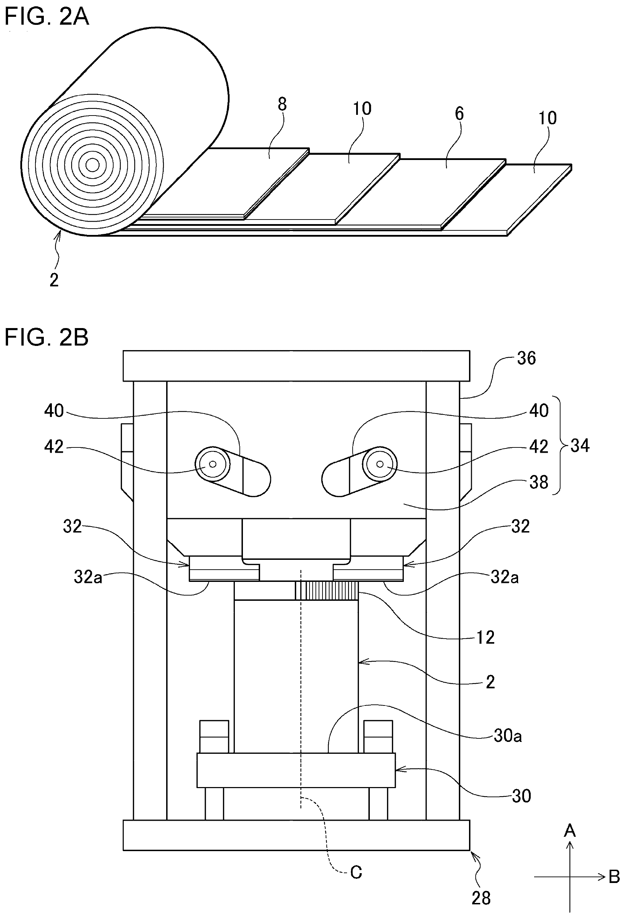

FIG. 1 is a sectional view of a battery 1. The battery 1 is, for example, a rechargeable secondary battery, such as a lithium-ion battery, nickel-hydrogen battery, and nickel-cadmium battery. The battery 1 as an example has a structure in which an electrode group 2 is housed together with an electrolyte (not illustrated) in an exterior can 4. The electrode group 2 is cylindrical, for example, and has a wound structure in which a first electrode plate 6 of band shape and a second electrode plate 8 of band shape are laminated, with a separator 10 of band shape provided therebetween, and wound in a spiral shape (see also FIG. 2A). In the present example, the first electrode plate 6 is a positive plate, and the second electrode plate 8 is a negative plate.

Each of the first electrode plate 6 and the second electrode plate 8 has a structure in which an electrode active material layer is laminated onto a current collector. In the case of a general lithium-ion secondary battery, the current collector is constituted by aluminum foil or the like for the positive electrode and is constituted by copper foil or the like for the negative electrode. The electrode active material layer can be formed by applying an electrode mixture to a surface of a current collector using a publicly-known coating device and by drying and rolling the electrode mixture. The electrode mixture is obtained by kneading materials, such as an electrode active material, a binding agent, and a conductive material, in a dispersion medium so that the materials are dispersed uniformly. In the case of a general lithium-ion secondary battery, the electrode active material is lithium cobalt oxide, lithium iron phosphate, or the like for the positive electrode and is graphite or the like for the negative electrode.

The first electrode plate 6 has a first uncoated portion 12 on which the electrode mixture is not applied, at one end of a width direction A, which is a direction intersecting a longitudinal direction of the band. The first uncoated portion 12 is an exposed portion of the current collector of the first electrode plate 6 on which the electrode active material layer is not laminated. Also, the second electrode plate 8 has a second uncoated portion 14 on which the electrode mixture is not applied, at the other end of the width direction A, i.e., at the end opposite to the side where the first uncoated portion 12 projects. The second uncoated portion 14 is an exposed portion of the current collector of the second electrode plate 8 on which the electrode active material layer is not laminated.

As described previously, the electrode group 2 has a structure in which the first electrode plate 6 and the second electrode plate 8 are wound. Accordingly, there are multiple end parts with respect to the width direction A of the first electrode plate 6 and the second electrode plate 8, arranged in a radial direction B of the electrode group 2. Therefore, the electrode group 2 includes multiple first uncoated portions 12 arranged in a radial direction B, and multiple second uncoated portions 14 arranged in a radial direction B. Each first uncoated portion 12 includes, at its tip, a curved portion 16 bent in a curved shape toward the winding center C of the electrode group 2. Also, each second uncoated portion 14 includes, at its tip, a curved portion 18 bent in a curved shape toward the winding center C. The electrode group 2 may include only the curved portions 16 or only the curved portions 18.

The separator 10 is constituted, for example, by a microporous film made of polypropylene resin or the like and intervenes between the first electrode plate 6 and the second electrode plate 8.

On the side where the first uncoated portions 12 project in the electrode group 2, a first current collector plate 20 is disposed. The first current collector plate 20 may be made of aluminum, for example. At least part of each curved portion 16 is in surface contact with the first current collector plate 20. That is, with the curved portions 16 formed, the contact area between each first uncoated portion 12 and the first current collector plate 20 is increased. Also, each curved portion 16 and the first current collector plate 20 are joined to each other by means of laser welding or the like. This electrically connects the current collector in each winding layer of the first electrode plate 6 and the first current collector plate 20.

On the side where the second uncoated portions 14 project in the electrode group 2, a second current collector plate 22 is disposed. The second current collector plate 22 may be made of copper, nickel, nickel-plated copper, or nickel-plated iron, for example. At least part of each curved portion 18 is in surface contact with the second current collector plate 22. That is, with the curved portions 18 formed, the contact area between each second uncoated portion 14 and the second current collector plate 22 is increased. Also, each curved portion 18 and the second current collector plate 22 are joined to each other by means of laser welding or the like. This electrically connects the current collector in each winding layer of the second electrode plate 8 and the second current collector plate 22.

The electrode group 2 with the first current collector plate 20 and the second current collector plate 22 joined thereto is housed together with an electrolyte in the exterior can 4 of bottomed cylindrical shape. The exterior can 4 may be made of copper, nickel, iron, or an alloy thereof, for example. The second current collector plate 22 is joined to an inner bottom surface of the exterior can 4 by welding or the like. Into an opening of the exterior can 4, a sealing plate 26 made of metal is fitted via an insulating gasket 24. Accordingly, the electrode group 2 and electrolyte are sealed inside the exterior can 4. The first current collector plate 20 is joined to the sealing plate 26 by welding or the like.

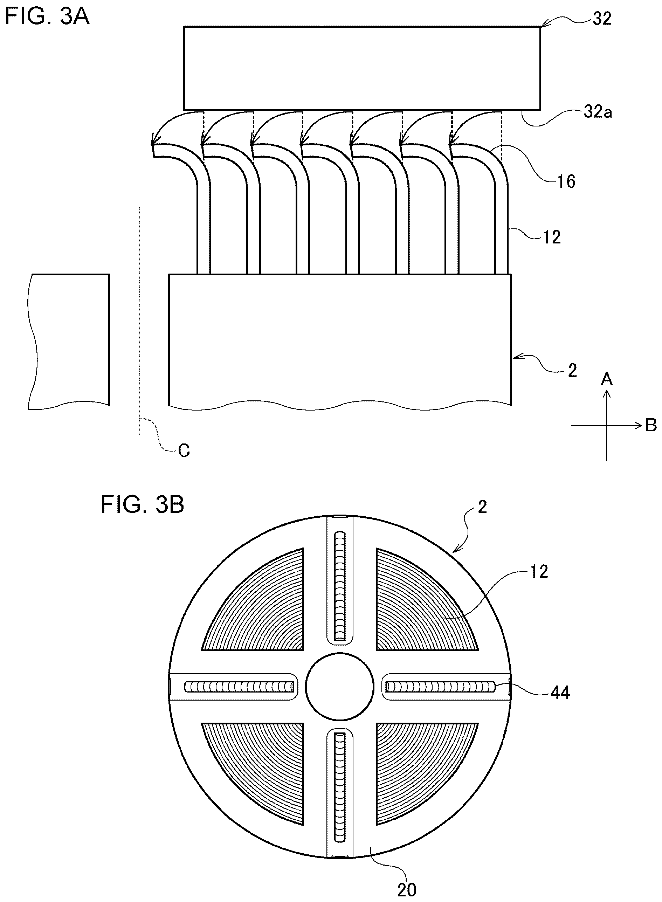

There will now be described the formation of the electrode group 2, the processing of the end parts of the electrode group 2, and the joining of the electrode group 2 and the current collector plates. FIG. 2A is a diagram that shows a formation process of the electrode group 2. In FIG. 2A, illustration of the first uncoated portions 12 and the second uncoated portions 14 is omitted. FIG. 2B is a diagram that shows a processing process of the electrode group 2. FIG. 2B shows some of the end parts of the electrode group 2 in a cross section. FIG. 3A is a diagram that shows a state where end parts of the electrode group 2 are bent. FIG. 3B is a diagram that shows a state after the electrode group 2 and the current collector plates are joined together. FIG. 3B illustrates the first current collector plate 20 as an example.

First, as illustrated in FIG. 2A, the first electrode plate 6, the second electrode plate 8, and separators 10, which each have a band shape, are prepared. Then, a separator 10, the first electrode plate 6, a separator 10, and the second electrode plate 8 are laminated in this order. The resulting laminated body is wound in a spiral shape to form the electrode group 2 of wound type.

Thereafter, as illustrated in FIG. 2B, the electrode group 2 is set in a processing device 28. The processing device 28 includes a stage 30, a pair of jigs 32, a cam mechanism 34, and a frame 36. The stage 30 has a placement surface 30a on which the electrode group 2 is placed. The placement surface 30a as an example includes a circular groove (not illustrated) into which end parts of the electrode group 2 fit, and, with the fitting of the end parts into the groove, the electrode group 2 is fixed. The method of fixing the electrode group 2 is not particularly limited. The posture of the electrode group 2 is set such that the winding center C extends in a normal direction of the placement surface 30a. The posture of the electrode group 2 shown in FIG. 2B is set such that the second uncoated portions 14 face the placement surface 30a side, and the first uncoated portions 12 face the side opposite to the placement surface 30a. The stage 30 can rotate the electrode group 2 around the winding center C.

At a position opposite the placement surface 30a across the electrode group 2, a pair of jigs 32 are arranged. Each jig 32 has a pressing surface 32a facing the electrode group 2. Each pressing surface 32a comes into contact with multiple uncoated portions (first uncoated portions 12 in FIG. 2B) of the electrode group 2 facing the side opposite to the placement surface 30a. Each jig 32 is supported by the frame 36 to be capable of advancing toward and receding from the electrode group 2. The frame 36 also supports a drive unit (not illustrated) that allows each jig 32 to advance toward and recede from the electrode group 2.

The cam mechanism 34 is disposed at a position farther away from the electrode group 2 than the pressing surfaces 32a and is supported by the frame 36. The cam mechanism 34 includes a plate 38, a pair of cam grooves 40, and a pair of cam followers 42. The plate 38 is fixed to the frame 36. The pair of cam grooves 40 are provided on the plate 38. The pair of cam grooves 40 are arranged so as to sandwich the winding center C when viewed from the direction in which the winding center C extends, i.e., the width direction A. The pair of cam followers 42 are connected, at one end, to the respective jigs 32. The other end of one cam follower 42 is slidably inserted into one cam groove 40. The other end of the other cam follower 42 is slidably inserted into the other cam groove 40.

Each cam groove 40 extends diagonally toward the electrode group 2, from the outside toward the inside in a radial direction B of the electrode group 2. Also, each cam groove 40 is curved such that, toward the inside in a radial direction B, the amount of shifting in the direction toward the electrode group 2 gradually increases.

Each jig 32 is shifted by the cam mechanism 34. More specifically, each jig 32 is advanced toward the electrode group 2 by the drive unit while being pressed against multiple first uncoated portions 12 arranged in a radial direction B of the electrode group 2. Then, the corresponding cam follower 42 slides along the corresponding cam groove 40, and the jig 32 shifts toward the winding center C while approaching the electrode group 2. At the time, the jig 32 is shifted in a curved path such that the shifting amount (the amount of shifting per unit time) in the direction toward the electrode group 2 gradually increases and the shifting amount in the radial direction B of the electrode group 2 gradually decreases, as shown in FIG. 3A. As a result, the tips of the multiple first uncoated portions 12 are bent inward in the radial direction B, so as to form multiple curved portions 16.

In the initial stage of shifting, each jig 32 shifts more greatly in the direction toward the winding center C than in the direction toward the electrode group 2. Thereafter, in the process of shifting, the shifting amount in the direction toward the electrode group 2 gradually increases, and the shifting amount in the radial direction B of the electrode group 2 gradually decreases. As a result, in the latter stage of shifting, each jig 32 shifts more greatly in the direction toward the electrode group 2 than in the direction toward the winding center C. That is, the shifting mode of each jig 32 transitions from a state where the shifting amount in the radial direction B is larger than the shifting amount in the direction toward the electrode group 2 to a state where the shifting amount in the direction toward the electrode group 2 is larger than the shifting amount in the radial direction B.

Thus, by shifting each jig 32 in a curved path, the force for directing the bending direction inward in the radial direction B can be preferentially applied, rather than the pressing force, to each first uncoated portion 12 in the initial stage of shifting of the jig 32. Then, in the latter stage of shifting, each first uncoated portion 12 that has been induced to bend inward in the radial direction B can be strongly pressed. Therefore, the tips of the first uncoated portions 12 can be bent, with the bending directions thereof aligned.

Also, each jig 32 bends multiple first uncoated portions 12 in a partial area in a circumferential direction of the electrode group 2. The pair of jigs 32 in the present example press first uncoated portions 12 in a straight line passing through the winding center C when viewed from the extending direction of the winding center C, as the first stage of the processing process. Subsequently, as the second stage, the electrode group 2 is rotated by 90 degrees around the winding center C, and the pair of jigs 32 again press first uncoated portions 12 in a straight line passing through the winding center C. Therefore, on the electrode group 2, curved portions 16 are formed in a cross shape.

After the curved portions 16 of cross shape are formed, as shown in FIG. 3B, laser welding or the like is applied to the positions where the multiple bent first uncoated portions 12, i.e., the multiple curved portions 16, and the first current collector plate 20 overlap, so as to form joint portions 44. Thus, the electrode group 2 and the first current collector plate 20 are joined together. The electrode group 2 joined with the first current collector plate 20 is then fixed to the stage 30, with the posture thereof set such that the second uncoated portions 14 face the side opposite to the placement surface 30a. Thereafter, the above-described processing process is performed on the second uncoated portions 14 with the pair of jigs 32. As a result, curved portions 18 are formed in a cross shape on the electrode group 2. Then, multiple curved portions 18 and the second current collector plate 22 are joined together by means of laser welding or the like.

The electrode group 2 with the first current collector plate 20 and the second current collector plate 22 joined thereto is housed together with an electrolyte in the exterior can 4. Subsequently, processes such as joining the second current collector plate 22 and the exterior can 4, joining the first current collector plate 20 and the sealing plate 26, and fitting the sealing plate 26 into the opening of the exterior can 4 are performed, thereby obtaining the battery 1.

As described above, the joining method for joining the electrode group 2 and a current collector plate according to the present embodiment includes: pressing the jigs 32 against multiple end parts (at least either first uncoated portions 12 or second uncoated portions 14) of an electrode plate arranged in a radial direction of the electrode group 2; shifting each jig 32 in a curved path such that the shifting amount in the direction toward the electrode group 2 gradually increases and the shifting amount in the radial direction of the electrode group 2 gradually decreases; bending the multiple end parts; and joining the multiple end parts thus bent and a current collector plate (at least one of the first current collector plate 20 or the second current collector plate 22).

The inventors have found that, when bending multiple uncoated portions, if the jigs 32 are shifted linearly to apply a load to each uncoated portion, the position and direction of the bending of each uncoated portion will be irregular, so that bending the uncoated portions uniformly in the same direction will be difficult. Such irregular bending of uncoated portions may degrade the quality of welding between the electrode group 2 and the current collector plates. In contrast, in the present embodiment, each jig 32 is shifted in a curved path to apply a load to each uncoated portion. This can form curved portions of uniform shape bending in the same direction at the tips of uncoated portions. Therefore, the quality of welding between the electrode group 2 and the current collector plates can be improved, so that the quality of the battery 1 can also be improved.

Also, as a method for facilitating the bending of each uncoated portion, providing slits on the uncoated portions is conceivable, as in the related art. However, in this case, cutting chips of the uncoated portions may be caused when the slits are formed. If the cutting chips are mixed into the electrode group 2, the quality of the battery 1 may deteriorate, so measures against the cutting chips are necessary. In contrast, according to the joining method of the present embodiment, curved portions of uniform shape can be formed without providing slits on the uncoated portions. Therefore, the quality of the battery 1 can be further improved.

Also, in the joining method of the present embodiment, uncoated portions in partial areas in a circumferential direction of the electrode group 2 are bent. Accordingly, circumferential deflection caused by the bending of the uncoated portions can be absorbed by the unbent areas. Therefore, the quality of welding between the electrode group 2 and the current collector plates can be improved, so that the quality of the battery 1 can also be improved.

Also, in the joining method of the present embodiment, the jigs 32 are shifted by the cam mechanism 34. This enables shifting of the jigs 32 with high accuracy with a simple configuration. Therefore, the quality of the battery 1 can be further improved.

An embodiment of the present disclosure has been described in detail. The abovementioned embodiment merely describes a specific example for carrying out the present disclosure. The embodiment is not intended to limit the technical scope of the present disclosure, and various design modifications, including changes, addition, and deletion of constituting elements, may be made to the embodiment without departing from the scope of the invention defined in the claims. Further, the hatching provided on the cross sections in the drawings does not limit the materials of the objects with the hatching.

### INDUSTRIAL APPLICABILITY

The present disclosure is applicable to a method for joining an electrode group and a current collector plate.

### REFERENCE SIGNS LIST

- 1: battery
- 2: electrode group
- 6: first electrode plate
- 8: second electrode plate
- 10: separator
- 12: first uncoated portion
- 14: second uncoated portion
- 20: first current collector plate
- 22: second current collector plate
- 32: jig
- 34: cam mechanism

## Claims

1. A joining method for joining an electrode group (2) of wound type in which a separator (10) and an electrode plate (6, 8) are laminated and wound, and a current collector plate (20, 22), the joining method comprising:
pressing a jig (32) against a plurality of end parts (12, 14) of the electrode plate (6, 8) arranged in a radial direction of the electrode group (2), shifting the jig (32) in a curved path such that the shifting amount in the direction toward the electrode group (2) gradually increases and the shifting amount in the radial direction gradually decreases, and bending the plurality of end parts (12, 14); and
joining the plurality of end parts (12, 14) thus bent and the current collector plate (20, 22).

2. The joining method according to claim 1, wherein the plurality of end parts (12, 14) are bent in a partial area in a circumferential direction of the electrode group (2).

3. The joining method according to claim 1 or 2, wherein the jig (32) is shifted by a cam mechanism (34).

## Patentansprüche

1. Fügeverfahren zum Fügen einer Elektrodengruppe (2) vom gewickelten Typ, bei der ein Separator (10) und eine Elektrodenplatte (6, 8) laminiert und gewickelt sind, und einer Stromkollektorplatte (20, 22), wobei das Fügeverfahren umfasst:
Pressen einer Lehre (32) gegen eine Vielzahl von Endteilen (12, 14) der Elektrodenplatte (6, 8), die in einer radialen Richtung der Elektrodengruppe (2) angeordnet sind, Verschieben der Lehre (32) auf einem gekrümmten Weg, so dass der Verschiebungsbetrag in Richtung zur Elektrodengruppe (2) allmählich zunimmt und der Verschiebungsbetrag in der radialen Richtung allmählich abnimmt, und Biegen der Vielzahl von Endteilen (12, 14); und
Fügen der so gebogenen Vielzahl von Endteilen (12, 14) und der Stromkollektorplatte (20, 22).

2. Fügeverfahren nach Anspruch 1, wobei die Vielzahl von Endteilen (12, 14) in einem Teilbereich in einer Umfangsrichtung der Elektrodengruppe (2) gebogen werden.

3. Fügeverfahren nach Anspruch 1 oder 2, wobei die Lehre (32) durch einen Nockenmechanismus (34) verschoben wird.

## Revendications

1. Procédé d'assemblage pour assembler un groupe d'électrodes (2) de type bobiné dans lequel un séparateur (10) et une plaque d'électrode (6, 8) sont stratifiés et bobinés, et une plaque collectrice de courant (20, 22), le procédé d'assemblage comprenant :
le pressage d'un gabarit (32) contre une pluralité de parties d'extrémité (12, 14) de la plaque d'électrode (6, 8) agencées dans une direction radiale du groupe d'électrodes (2), le déplacement du gabarit (32) selon un trajet courbe de sorte que la quantité de déplacement dans la direction vers le groupe d'électrodes (2) augmente progressivement et la quantité de déplacement dans la direction radiale diminue progressivement, et le pliage de la pluralité de parties d'extrémité (12, 14) ; et
l'assemblage de la pluralité de parties d'extrémité (12, 14) ainsi pliées et de la plaque collectrice de courant (20, 22).

2. Procédé d'assemblage selon la revendication 1, dans lequel la pluralité de parties d'extrémité (12, 14) sont pliées dans une zone partielle dans une direction circonférentielle du groupe d'électrodes (2).

3. Procédé d'assemblage selon la revendication 1 ou 2, dans lequel le gabarit (32) est déplacé par un mécanisme à came (34).
